Europäisches Patentamt

European Patent Office

Office européen des brevets

(19)

(11) Numéro de publication: **0 251 929**
**B1**

(12) **FASCICULE DE BREVET EUROPEEN**

(45) Date de publication du fascicule du brevet: **13.06.90**

(51) Int. Cl.⁵: **F 16 L 33/22, F 16 L 33/20**

(21) Numéro de dépôt: **87401524.1**

(22) Date de dépôt: **01.07.87**

(54) **Pièce de raccord entre un élément mécanique rigide et un tube flexible.**

(30) Priorité: **04.07.86 FR 8609734**

(43) Date de publication de la demande:
**07.01.88 Bulletin 88/01**

(45) Mention de la délivrance du brevet:
**13.06.90 Bulletin 90/24**

(84) Etats contractants désignés:
**AT BE CH DE ES FR GB IT LI LU NL SE**

(56) Documents cités:
**US-A-2 015 081**
**US-A-2 071 478**

(73) Titulaire: **SAINT-GOBAIN VITRAGE INTERNATIONAL**
**18, avenue d'Alsace**
**F-92400 Courbevoie (FR)**

(72) Inventeur: **Canaud, Michel**
**119, Avenue Victor Hugo**
**F-75116 Paris (FR)**
Inventeur: **Dewitte, Philippe**
**4, route Nationale**
**F-60150 Thourotte (FR)**

(74) Mandataire: **Leconte, Jean-Gérard et al**
**Saint-Gobain Recherche 39, Quai Lucien Lefranc**
**F-93304 Aubervilliers Cedex (FR)**

## Description

L'invention a trait à un ensemble d'une pièce de raccord et d'un tube flexible dans lequel circule un fluide sous haute pression.

Pour l'acheminement de fluides à relativement haute température, par exemple supérieure à 100°C, et sous une haute pression, par exemple à 8000 kilopascals (80 bars), il est courant d'utiliser des tubes flexibles reliant, par exemple la sortie de matière d'un organe de pompage disposé au-dessus du fût de matière à l'entrée de l'organe de distribution et/ou de traîtement du fluide. Par fluide et dans la suite de ce mémoire, on entend des produits présentant généralement une grande viscosité telles des huiles de pétrole, des matières thermoplastiques, par exemple à base de caoutchouc et plus particulièrement à base de caoutchouc butyl et/ou de polyisobutylène, tous matériaux appliqués notamment dans les industries automobiles et verrières. Pratiquement solides à température ambiante — un caoutchouc butyl et/ou de polyisobutylène à poids moléculaire de 8000 à 15000 selon STANDINGER ayant par exemple une viscosité voisine de 115° Mooney au bout de huit heures et à 40°C — ces matériaux doivient être travaillés à des températures souvent largement supérieures à 100°C — et exercent alors des pressions encore supérieures parfois à 30000 kilopascals. Lorsque ces fluides sont distribués au moyen de tubes flexibles, constitués de tubes intérieur et extérieur en caoutchouc armés d'une trâme métallique centrale, on utilise tant pour des raisons de sécurité que de technologie des tubes de petits diamètres, inférieurs à 10 mm raccordés à leur entrée et sortie de la manière suivante. La trâme métallique est tout d'abord dénudée sur quelques centimètres puis on fait pénétrer de force, à la presse, une pièce de raccord constituée de deux éléments métalliques. Le premier élément est constitué par un tube creux dont le diamètre extérieur correspond au diamètre intérieur du flexible et d'extrémité tronconique amincie. Il se prolonge à son autre extrémité par une portion de plus large diamètre extérieur formant une embase.

Le tube est pourvu au voisinage de cette embase d'un filetage extérieur sur lequel est vissé le second élément constitué d'une collerette venant buter sur l'embase. Cette collerette se prolonge par une seconde portion filetée dont le diamètre intérieur correspond au diamètre du flexible. Lorsque la pièce de raccord est mise en place, opération facilitée par la forme tronconique du tube, cette second portion filetée de la collerette vient à être vissée sur la trâme métallique dénudée du flexible. De plus pour une meilleure étanchéité, le filetage porté par le tube creux est d'une longueur plus grande que celle nécessaire au vissage de la collerette sur le tube creux, de sorte que celui-ci est partiellement vissé dans le tube caoutchouc intérieur du flexible.

Un tel raccord présente un point faible au niveau de l'extrémité tronconique du tube creux, le fluide acheminé par le flexible exerçant une pression très importante en raison du rétrécissement de la section. Expérimentalement, on constate des ruptures de raccords pour des pressions dépassant 8500 kilopascals avec des flexibles de plus de 700 mm². Cette limitation technique est d'autant plus ennuyeuse que — comme indiqué précédemment — la technologie des tubes flexibles permet elle d'endurer pour des mêmes sections des pressions supérieures à 30000 kilopascals. De plus ce type de raccord est d'un montage délicat qui ne peut être effectué qu'en usine, en pratique le fabricant de tubes flexibles les fournit avec raccords, ce qui n'est pas toujours pleinement satisfaisant pour l'utilisateur qui par exemple pour le développement de nouvelles machines souhaite disposer de raccords qu'il peut monter à volonté.

Il est également connu du brevet US—A— 2071478 une pièce de raccord pour tube en caoutchouc. Cette pièce de raccord est constituée par un premier élément formant embase sur laquelle vient se visser par exemple un robinet. Cet élément tubulaire est enfoncé de force dans le tube en caoutchouc et est muni de dents qui s'opposent à son arrachage. De plus son extrêmité pénétrant dans le tube en caoutchouc est fendue de manière à s'ouvrir en deux pan lorsque l'on introduit en vissant à l'intérieur de ce premier élément tubulaire un second élément. Pour éviter que le tube en caoutchouc ne s'expanse trop, son extrémité et de préférence munie d'une frette en laiton.

Ce type de raccord entraîne une diminution de plus de moitié de la section de passage du fluide circulant dans le tube de caoutchouc. De plus, le second élément tubulaire pénètre à l'intérieur du tube en caoutchouc plus avant que le premier élément tubulaire de sorte que lorsque le fluide circule en direction de l'embase, il exerce une forte pression sur le premier élément tubulaire qui a tendance à être éjecté. Cette éjection ne se produit pas lorsque le fluide circule de l'embase vers le tube en caoutchouc mais d'une part les raccords sont nécessaires à chaque extrémité du tube de caoutchouc et d'autre part on conserve toujours ce rétrécissement très important de la section de passage du fluide, véritable goulet d'étranglement de sorte que ce type de raccord ne permet pas de résister à des pressions très élevées, largement supérieures à 80 bars par exemple.

L'invention a pour but un ensemble d'une pièce de raccord et d'un tube flexible susceptibles de résister à des pressions de travail très élevées, par exemple supérieures à 30000 kilopascals. L'invention a également pour objet un ensemble de montage simplifié.

Un ensemble d'une pièce de raccord et d'un tube flexible selon l'invention comprend trois élément montés autour du tube flexible, une pièce tubulaire creuse renflée à une extrémité en une tête cylindrique et enfoncée dans le tube flexible, un conduit interne de verrouillage placé dans la pièce tubulaire creuse et un collier de serrage, le conduit interne de verrouillage comportant une section conique dont le diamètre maximum extérieur est égal au diamètre intérieur du tube flexible. Ainsi, le fluide ne peut circuler qu'au travers du conduit interne de verrouillage. De préférence, la section de passage du fluide au niveau de cette extrémité élargie est peu différente de la section de passage dans le tube flexible, cette section de passage se rétrécissant ensuite progressivement pour éviter un étranglement du fluide à haute pression.

La pièce tubulaire creuse est essentiellement caractérisée en ce qu'elle porte sur sa périphérie des éléments grimpants dans le tube intérieur en caoutchouc du tube flexible et à son extrémité opposée à la tête une portion conique fendue sur sa hauteur de manière à s'ouvrir légèrement lorsqu'on force le conduit interne de verrouillage à s'avancer dans la pièce tubulaire.

D'autres avantages et caractéristiques de l'invention sont détaillés dans la description d'un mode de réalisation préféré de l'invention, faite ci-après en référence aux dessins annexés qui représentent:

figure 1: un schéma d'ensemble d'un raccord selon l'invention comportant essentiellement un tube flexible une pièce tubulaire creuse, un conduit intérieur de verrouillage et un collier de serrage,

figure 2: une coupe diamétrale de la pièce tubulaire creuse représentée à la figure 1,

figure 3: une couple diamétrale du conduit intérieur de verrouillage de la figure 1,

figure 4: une vue de côté du collier de serrage.

Selon l'invention, le raccord s'établit par la coopération de quatre éléments qui contribuent à son étanchéité; le tube flexible A à lui-même, une pièce tubulaire creuse B renflée à une extrémité en une tête par exemple cylindrique 1 et enfoncée dans le tube flexible A, un conduit interne de verrouillage C et un collier extérieur D maintenant l'ensemble.

Le tube flexible A comporte par exemple deux tuyaux souples concentriques en caoutchouc, séparés par une armature formée d'une trame métallique et est de préférence habillé d'une résistance thermostatée. Ce type de tube flexible est capable d'endurer des pressions importantes, de l'ordre de par exemple 30000 kilopascals pour une section de passage égale à par exemple 1200 mm² et un diamètre extérieur de 55 mm. Pour la mise en oeuvre de l'ensemble selon l'invention, le tube flexible A est simplement coupé à la longueur voulue, sans dénudage, par exemple à l'aide d'une scie à métaux.

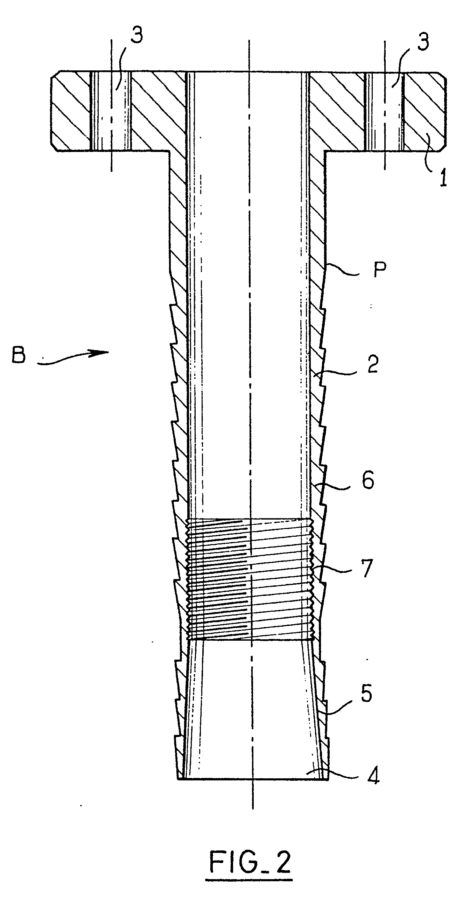

La pièce tubulaire creuse B, détaillée à la figure 2 comporte une section droite 2, dont le diamètre extérieur correspond au diamètre intérieur du tube flexible, et à un diamètre intérieur constant et renflée à une extrémité par exemple en une tête de raccordement cylindrique 1 munie de trous calibrés 3 pour la fixation du raccord, par boulonnage ou autres moyens équivalents, sur un organe métallique tel par exemple l'organe de pompage ou de distribution du fluide circulant au travers du tube flexible. L'extrémité 4 de la pièce tubulaire creuse B opposée à la tête 1 à une section intérieure légèrement tronconique allant en s'évasant. Cette portion conique de la pièce tubulaire creuse est fendue, par exemple quatre fois sur toute sa hauteur, de sorte que les quatre pans 5 ainsi formés peuvent s'ouvrir en corolle ce qui assure le blocage de la pièce tubulaire B dans le tube flexible A. Ce blocage est encore amélioré si, de préférence, de l'extrémité tronconique jusqu'à un point P situé à proximité de la tête 1, soit par exemple sur plus de troisquarts de la section droite 2, on usine — pour y former des dents 6 — la périphérie de la pièce tubulaire dont le diamètre extérieur correspond au diamètre intérieur de la section d'ouverture du tube flexible. Ces dents 6 assez larges, de par exemple 10 mm de hauteur, permettent un grippage de la pièce tubulaire dans le tube flexible en pénétrant dans le tube en caoutchouc intérieur du tube flexible A. D'autres moyens équivalents à ces dents usinées peuvent être utilisés tel un filetage d'un pas de l'ordre de la hauteur des dents. Grâce à ces dents 6 — ou à ce filetage — la pénétration de la pièce tubulaire B est relativement facile et il n'est pas nécessaire d'utiliser une presse d'emboutissage, une simple masse étant au plus nécessaire.

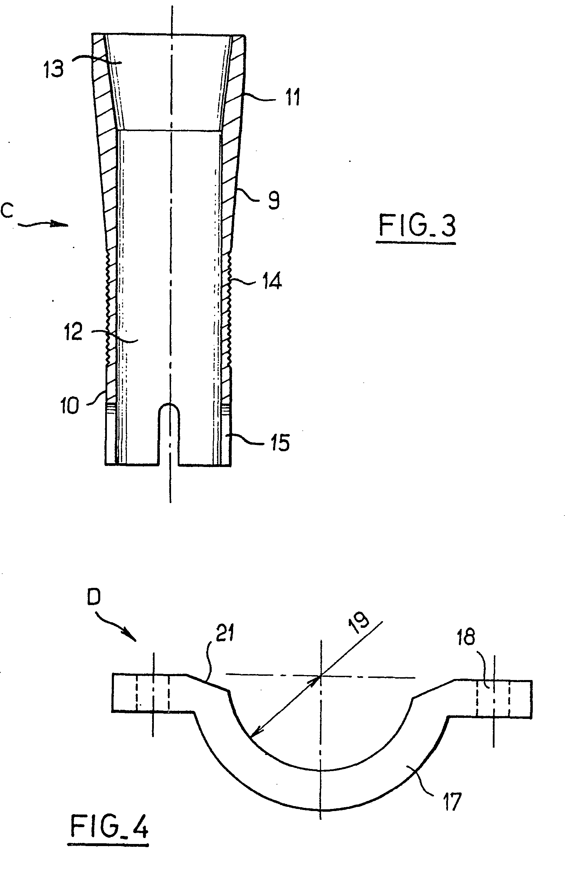

Cette pièce tubulaire B est en outre pourvue intérieurement d'un filetage fin 7 usiné dans sa portion droite, allant de préférence jusqu'à la base de la portion conique. Ce filetage fin 7 est destiné au montage du conduit intérieur de verrouillage C décrit plus en détail à la figure 3.

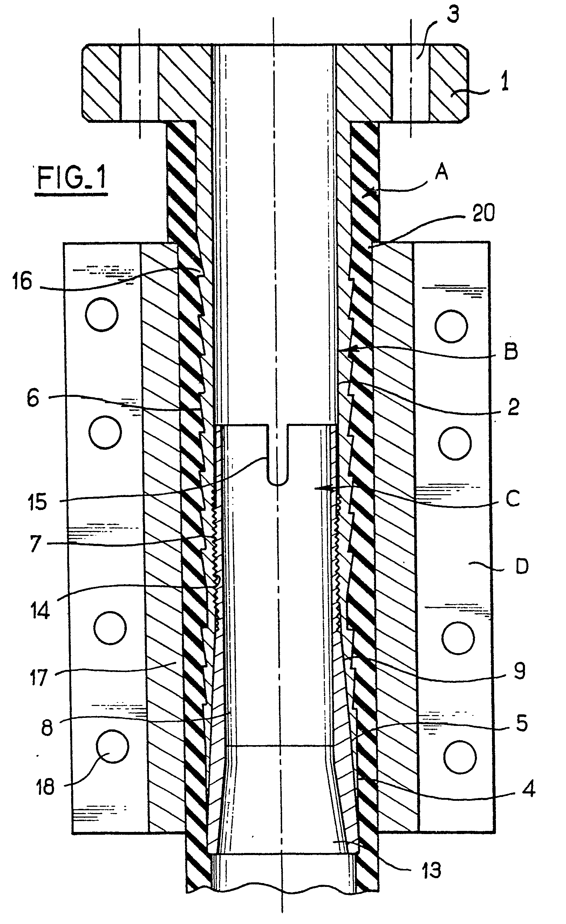

Ce conduit intérieur de verrouillage C est constitué d'un tube creux B pouvant être placé dans la pièce tubulaire B. Son contour extérieur 9 permet son parfait emboîtement dans celle-ci; il présente donc de même une section droite 10 et une section conique 11 allant en s'évasant. Cette section conique 11 a un diamètre maximum égal au diamètre intérieur du tube flexible A. Le conduit intérieur de verrouillage C assure donc une parfaite continuité du tube comme on le voit à la figure 1. En position de verrouillage, le conduite intérieur C pénètre même légèrement dans le tube en caoutchouc ce qui assure l'étanchéité, le fluide ne pouvant circuler qu'au travers du conduit intérieur C.

D'autre part, le canal de circulation du fluide 12 présente lui-aussi une section élargie 13 dans la section tronconique ceci afin de faciliter la circulation du fluide dont la section de pressage est ainsi rétrécie de façon continue.

Revenons à la périphérie du conduit de verrouillage C où nous trouvons un filetage fin usiné 14 le long de la section droite C et correspondant exactement au filetage 7 de la pièce tubulaire B. Enfin pour visser le conduit intérieur C dans la pièce tubulaire B à l'aide d'un outil par exemple cruciforme, l'extrémité du conduit intérieur opposée à l'extrémité tronconique est de préférence pourvue d'encoches, représentées ici au nombre de quatre.

Pour le montage du raccord, le tube flexible A est tout d'abord tronçonné à la longueur souhaitée et on place par une vissage rapide le conduit intérieur de verrouillage C dans la pièce tubulaire B, le conduit intérieur de verrouillage C étant introduit par l'extrémité 4 de la pièce tubulaire B. Celle-ci est alors efoncée dans le tube intérieur 16 en caoutchouc du tube flexible A. Eventuellement on peut encore améliorer la résistance du raccord par une soudure de la pièce tubulaire B sur la trâme métallique du tube flexible A. Cette étape accomplie, on positionne précisément grâce à l'outil cruciforme le conduit intérieur C dans la pièce tubulaire B en accédant au conduit de verrouillage C cette fois par le tête 1 de la pièce tubulaire B. En vissant le conduit C, on comprime plus fortement la portion conique 4 dont les pans fendus 5 s'écartent, assurant ainsi une parfaite étanchéité. Enfin pour maintenir l'ensemble, on fixe un collier D représenté à la figure 4.

Ce collier D est formé de deux demi-brides 17 boulonnées l'une à l'autre (trous 18). De préférence, ces demi-brides 17 ont un diamètre intérieur 19 inférieur ou égal au diamètre extérieur du tube flexible A ainsi, comme il ressort de la figure 1 sous la référence 20, le tube flexible A se trouve comprimé, le collier D s'enfonçant dans le tube en caoutchouc du tube flexible A. Pour éviter que le tube flexible A ainsi pincé ne soit coupé, les demi-brides 17 ont de préférence des bords chanfreinés 21.

Le raccord ainsi fixé, le montage par exemple sur l'organe de pompage peut se poursuivre de manière habituelle étant donné qu'il s'agit de raccords pièce métallique contre pièce métallique, soit tête métallique 1 rigide contre tout autre organe en amont ou en aval du flexible. Le raccord peut éventuellement être thermostaté, de même que le tube flexible A selon les techniques usuelles. Une témperature constante est en effet nécessaire pour l'acheminement de certains produits tels par exemple des caoutchoucs à base de polyisobutylène utilisés pour réaliser des vitrages multiples.

Il doit être noté que d'une manière très avantageuse, les rétrécissements de la section de passage du fluide sont progressifs et que les pertes de charge au niveau du raccord restent très faibles.

Le mode de réalisation développé ci-dessus ne doit pas être entendu comme limitatif de l'invention.

Ainsi, il a déjà été indiqué que la pièce tubulaire B peut être munie sur sa périphérie non de dents 6 mais d'un filetage suivant une hélice de large pas ou d'autres moyens grippants équivalents destinés à simplifier la pénétration de la pièce tubulaire B dans le tube flexible. A la limite, cette pièce tubulaire peut être lisse et dans ce cas, sa mise en place est assurée par la pression du fluide circulant dans le tube flexible et entraînant l'ouverture en corolle des pans 5 de l'extrémité 4 de la pièce tubulaire B. Le système génère donc sa propre étanchéité, qui est d'autant plus assurée que la pression intérieure exercée par le fluide est grande.

D'autre part, aux filetages fins portés par la pièce tubulaire B est le conduite intérieur de verrouillage C, on peut substituer d'autres moyens de fixation ou même simplement de maintien du conduit intérieur C dans la pièce tubulaire B. En effet, lorsque le fluide circule de l'extrémité tronconique en direction de la tête, il exerce sur l'extrémité conique en premier lieu rencontrée du conduit intérieur C une très forte pression en raison du rétrécissement de la section de passage. Cette pression est suffisante pour faire avancer légèrement le conduit intérieur C et assurer ainsi l'étanchéité et le verrouillage de la pièce tubulaire métallique B. Dans ce cas, il va de soi que les encoches en croix prévues pour l'outil cruciforme sont inutiles, même en présence de filetages, ces encoches peuvent d'ailleurs être remplacées par tout autre moyen de vissage équivalent et permettant un accès simple au conduit C déjà placé dans la pièce tubulaire B.

Le raccord de l'ensemble selon l'invention est réalisé de préférence dans un matériau facile à usiner très précisément et non corrodable.

Un tel raccord tient avec des fluides circulant à plus de 100°C, sous une pression supérieure à 8500 kilopascals et même à 30000 kilopascals. Ainsi avec un tube flexible commercialisé par la société NORMYDRO sous le référence FC 195/24, on a pu acheminer en vue de réaliser un cordon pour vitrages multiples, pendant 800 heures un caoutchouc butyl et polyisobutylène, à poids moléculaire de 8000 à 15000 selon STANDINGER et ayant à 40°C une viscosité voisine de 155° Mooney (mesurée avec un consistomètre Mooney selon la recommandation ASTM D 1646—74) et exerçant une pression de près de 30000 kilopascals.

**Revendications**

1. Ensemble d'une pièce de raccord et d'un tube flexible (A) — dans lequel circule un fluide à haute pression — comportant une pièce tubulaire creuse (B) renflée à une extrémité en une tête (1) de raccordement et enfoncée dans le tube flexible (A), un conduit interne (C) de verrouillage de la pièce tubulaire (B) et un collier de serrage (D), caractérisé en ce que le conduit interne (C) comporte une section conique (11) dont le diamètre maximum extérieur est égal au diamètre intérieur du tube flexible (A).

2. Ensemble d'une pièce de raccord et d'un tube flexible (A) selon la revendication 1, caractérisé en ce que la pièce tubulaire creuse (B) est pourvue à sa périphérie d'éléments grippants (6) dans le tube intérieur en caoutchouc (16) du tube flexible (A).

3. Ensemble d'une pièce de raccord et d'un tube flexible (A) selon la revendication 2, caractérisé en ce que lesdits éléments grippants sont en forme de dents (6).

4. Ensemble d'une pièce de raccord et d'un tube flexible (A) selon l'une des revendications précédentes, caractérisé en ce que l'extrémité 4 de la pièce tubulaire opposée à la tête (1) est conique et fendue de manière à ce que cette portion s'ouvre en différents pans (5) lorsque le conduit interne (C) de verrouillage s'avance dans la pièce tubulaire (B).

5. Ensemble d'une pièce de raccord selon l'une des revendications précédentes, caractérisé en ce que la pièce tubulaire (B) porte un filetage (7) interne correspondant à un filetage externe (14) porté par le conduit intérieur (C) de verrouillage.

6. Ensemble d'une pièce de raccord selon l'une des revendications précédentes, caractérisé en ce que le canal de circulation de fluide (12) au travers du conduit intérieur de verrouillage (C) est de forme tronconique.

7. Ensemble d'une pièce de raccord selon l'une des revendications précédentes, caractérisé en ce que le conduit intérieur (C) de verrouillage porte une série d'encoches (15) qui permettent — au moyen d'un outil cruciforme — de visser le conduit intérieur de verrouillage (C) portant le filetage (14) sur le filetage (7) porté par la pièce tubulaire (B).

8. Ensemble d'une pièce de raccord selon l'une des revendications précédentes, caractérisé en ce que le collier (D) est formé de deux demi-brides (17) ayant des bords chanfreinés (21) et dont le diamètre (19) est inférieur ou égal au diamètre extérieur du tube flexible (A).

9. Ensemble d'une pièce de raccord et d'un tube flexible (A) selon l'une des revendications précédentes, caractérisé en ce que le tube flexible (A) est constitué par deux tuyaux concentriques séparés par une armature métallique.

10. Application de l'ensemble d'une pièce de raccord et d'un tube flexible (A) selon l'une des revendications précédentes à l'acheminement de fluides à une pression supérieur à 8000 kilopascals.

11. Application de l'ensemble d'une pièce de raccord et d'un tube flexible (A) selon l'une des revendications 1 à 9, à l'acheminement de matières plastiques à base de caoutchouc butyl et/ou de polyisobutylène en vue de la réalisation de vitrages multiples.

## Patentansprüche

1. Anordnung aus einem Verbindungsstück und einem Schlauch (A) — in dem ein Fluid unter hohem Druck fließt — welche ein hohles Rohrstück (B), das an einem Ende zu einem Verbindungskopf (1) aufgeweitet und in einen Schlauch (A) eingelassen ist, ein internes Verriegelungsrohr (C) für das Rohrstück (B) und eine Klemmschelle (D) umfaßt, dadurch gekennzeichnet, daß das innere Rohr (C) einen konischen Abschnitt (11) aufweist, dessen maximaler äußerer Durchmesser gleich dem inneren Durchmesser des flexiblen Schlauchs (A) ist.

2. Anordnung aus einem Verbindungsstück und einem Schlauch (A) nach Anspruch 1, dadurch gekennzeichnet, daß das hohle Rohrstück (B) an seinem Umfang mit Elementen (6) versehen ist, die in den Innenschlauch (16) aus Kautschuk des Schlauchs (A) eingreifen.

3. Anordnung aus einem Verbindungsstück und einem Schlauch (A) nach Anspruch 2, dadurch gekennzeichnet, daß die Eingriffselemente die Form von Zähnen (6) haben.

4. Anordnung aus einem Verbindungsstück und einem Schlauch (A) nach einem der vorstehenden Ansprüche, dadurch gekennzeichnet, daß das dem Kopf (1) gegenüberliegende Ende (4) des Rohrstücks konisch ist und in einer Weise geschlitzt ist, daß sich dieser Teil in verschiedene Flächen (5) öffnet, wenn das innere Verriegelungsrohr (C) in das hohle Stück (B) vordringt.

5. Anordnung mit einem Verbindungsstück nach einem der vorstehenden Ansprüche, dadurch gekennzeichnet, daß das Rohrstück (B) ein inneres Gewinde (7) aufweist, das einem äußerem Gewinde (14) am inneren Verriegelungsrohr (C) entspricht.

6. Anordnung mit einem Verbindungsstück nach einem der vorstehenden Ansprüche, dadurch gekennzeichnet, daß der Fließkanal des Fluids (12) durch das innere Verriegelungsrohr (C) von kegelstumpfartiger Form ist.

7. Anordnung mit einem Verbindungsstück nach einem der vorstehenden Ansprüche, dadurch gekennzeichnet, daß das innere Verriegelungsrohr (C) eine Reihe von Einkerbungen (15) aufweist, die — mittels eines kreuzförmigen Werkzeugs — es erlauben, das innere Verriegelungsrohr (C) mit dem Gewinde (14) auf das Gewinde (7) des Rohrstücks (B) aufzuschrauben.

8. Anordnung mit einem Verbindungsstück nach einem der vorstehenden Ansprüche, dadurch gekennzeichnet, daß die Schelle (D) aus zwei Halbschellen (17) mit abgefasten Kanten (21) gebildet ist und daß ihr Durchmesser (19) kleiner oder gleich dem äußeren Durchmesser des Schlauchs (A) ist.

9. Anordnung aus einem Verbindungsstück und einem Schlauch (A) nach einem der vorstehenden Ansprüche, dadurch gekennzeichnet, daß der Schlauch (A) aus zwei konzentrischen Schläuchen besteht, die durch eine metallische Armierung getrennt sind.

10. Anwendung der Anordnung aus einem Verbindungsstück und einem flexiblen Schlauch (A) nach einem der vorstehenden Ansprüche auf die Durchleitung von Fluiden unter einem Druck von mehr als 8.000 kPa.

11. Anwendung der Anordnung aus einem Verbindungsstück und einem flexiblen Schlauch (A) nach einem der Ansprüche 1 bis 9 auf die Durchleitung von plastischen Materialien auf Basis von Butylkautschuk und/oder Polyisobutylen im Hinblick auf die Fertigung von Vielfachscheiben.

## Claims

1. Assembly of a coupling piece and a hose (A) — in which a fluid at high pressure circulates — comprising a hollow tubular component (B) enlarged at one end to a connector head (1) and pushed into the hose (A), an internal locking pipe (C) for locking the tubular component (B) and a clamping collar (D), characterized in that the internal pipe (C) comprises a conical portion (11), the maximum external diameter of which is equal to the internal diameter of the hose (A).

2. Assembly of a coupling piece and a hose (A) according to Claim 1, characterized in that the hollow tubular component (B) is provided at its periphery with gripping elements (6) for gripping into the internal tube of rubber (16) of the hose (A).

3. Assembly of a coupling piece and a hose (A) according to Claim 2, characterized in that said gripping elements are in the form of teeth (6).

4. Assembly of a coupling piece and a hose (A) according to one of the preceding Claims, characterized in that the end (4) of the tubular component remote from the head (1) is conical and is slit in such a way that this portion opens out into different flats (5) when the internal locking pipe (C) advances into the tubular component (B).

5. Assembly of a coupling piece according to one of the preceding Claims, characterized in that the tubular component (B) carries an internal threaded zone (7) corresponding to an external threaded zone (14) carried by the internal locking pipe (C).

6. Assembly of a coupling piece according to one of the preceding Claims, characterized in that the channel for circulation of the fluid (12) through the internal locking pipe (C) is of truncated conical shape.

7. Assembly of a coupling piece according to one of the preceding Claims, characterized in that the internal locking pipe (C) carries a series of notches (15) which enable the internal locking pipe (C) carrying the threaded zone (14) to be screwed — by means of a cruciform tool — into the threaded zone (7) carried by the tubular component (B).

8. Assembly of a coupling piece according to one of the preceding Claims, characterized in that the collar (D) is formed of two half-collars (17) having chamfered edges (21), the diameter (19) of which is less than or equal to the external diameter of the hose (A).

9. Assembly of a coupling piece and a hose A according to one of the preceding Claims, characterized in that the hose (A) is constituted of two concentric pipes separated by a metal reinforcement.

10. Application of the assembly of a coupling piece and a hose (A) according to one of the preceding Claims to the conducting of fluids at a pressure exceeding 8,000 kilopascals.

11. Application of the assembly of a coupling piece and a hose (A) according to one of Claims 1 to 9 to the conducting of plastics materials on a basis of butyl rubber and/or of polyisobutylene for the purpose of the production of multiple panes.

FIG. 1

FIG_2

13

11

C

9

14

12

10

15

## FIG. 3

D

21

19

18

17

## FIG. 4